# EUROPEAN PATENT APPLICATION

(11) **EP 2 156 943 A1**
(43) Date of publication of application: **24.02.2010**
(21) Application number: 07730525.8
(22) Date of filing: 30.04.2007
(51) Int. Cl.: B29C 70/34, B29C 70/46

(54) **COMPLEX GEOMETRIES MADE FROM COMPOSITE MATERIAL AND METHOD FOR FORMING SAID GEOMETRIES**

(71) Applicant: Airbus Operations S.L., 28906 Madrid (ES)
(72) Inventor: MENÉNDEZ MARTÍN, José Manuel, E-28660 Madrid (ES); SÁNCHEZ FERNÁNDEZ, Julián, E-28914 Madrid (ES)
(74) Representative: Elzaburu Marquez, Alberto
(86) International application number: PCT/ES2007/070087
(87) International publication number: WO 2008/132252

(57) **Abstract**

The invention proposes a forming process for forming geometrically complex laminates made of composite material which allows obtaining very complex folded geometries, reducing the area of influence of the formed areas and making its effect local, handling the geometry of the laminate near the area to be formed, replacing the formed geometries with folded geometries, this way forcing the area of influence of the forming to be local, such that the length of the reinforcing fibers affected by said forming is minimal. The present invention also relates to complex geometries of laminates made of composite material obtained by means of the previous forming process.

## Description

### Field of the Invention

The present invention relates to complex geometries of laminates made of composite material for aircraft and the forming process for forming such geometries.

### Background of the Invention

The intensive introduction of advanced composite materials in primary structures has become a fundamental process of structural optimization (based on weight savings and the improvement of mechanical properties), one of the chief objectives in the design and manufacture of a new generation of aircraft. This intensive introduction was possible thanks to the improvement of the techniques and apparatus for the taping and automatic cutting of laminates obtained from tapes consisting of continuous reinforcing fibers preimpregnated with polymeric resins, and the introduction of semi-automatic forming techniques, which has allowed obtaining increasingly larger and more complex structural elements in increasingly shorter time periods.

However, manufacturing by means of preimpregnated laminate stacking techniques, and subsequent cutting and forming of laminates, has an important limitation: the forming capacity of the laminates obtained after the stacking and cutting operations is limited. A laminate, formed by very long reinforcing fibers embedded in a resin matrix, will be formable if and only if it allows the slippage of contiguous reinforcing fibers in the areas directly affected by the forming and in the area of influence of the forming, extending to the entire surface of the laminate containing reinforcing fibers affected by the forming at any point along its entire length. However, this slippage is limited by the friction caused by the viscosity and tack of the resin, in combination with the long length of the fibers (approximately the length of the part), meaning that a small forming has a very large area of influence, approximately the dimensions of the laminate to be formed.

There are two known processes to facilitate the forming of laminates based on the modification of the variables affecting formability: the viscosity of the resin and the length of the reinforcing fibers.

One of the known forming techniques is based on a combination of heat (to decrease the resin viscosity) and pressure (used, on one hand, to form the laminate in the desired areas, and on the other hand, to press on the areas of the laminate indirectly affected by the forming, for the purpose of guiding the reinforcing fibers in their slippage and avoid the formation of creases and distortions). This technique is complex and expensive for large parts, because it is necessary to press and apply heat in the entire affected surface.

The second known technique consists of reducing the length of the reinforcing fibers or in the source raw material or making cuts having a moderate width in the preimpregnated tape during the automatic taping process. This technique works with oriented fibers being long enough to obtain the desired laminates, therefore the area of influence of the forming is large, while at the same time the length of the reinforcing fibers affected by said forming is also very large.

The present invention aims to solve these drawbacks.

### Summary of the Invention

In the view of the foregoing, the present invention proposes a process for forming complex geometries of laminates made of composite material which allows obtaining very complex folded geometries, reducing the area of influence of the formed areas, and making the slippage of the reinforcing fibers to said forming be local. The present invention also relates to the complex geometries of laminates made of composite material obtained by means of the previous process.

The present invention describes a forming handling process which would replace the formed geometries with folded geometries (i.e. geometries with which developable or almost developable surfaces are obtained by means of generating folds, transition areas and radius changes), thus forcing the area of influence of the forming to be local, such that the length of the reinforcing fibers affected by said forming is minimal.

The invention therefore describes a process for handling the geometry of laminates made of continuous or very long discontinuous fiber reinforcements preimpregnated with thermosetting or thermoplastic resin, used for manufacturing structural parts made of composite material, replacing formed geometries with developable or almost developable folded geometries, thus forcing the area of influence of the forming to be local, such that the length of the reinforcing fibers affected by said forming is minimal.

Therefore, whereas in a conventional design and manufacturing process of a structure the forming of a part is carried out only until its final geometry seeking its final functionality; in the design and manufacturing process according to the invention, the geometry of the part is adapted to facilitate the process such that the final forming is carried out by means of folding operations which generate a final developable or almost developable part, and in which the slippage of the reinforcing fibers will only affect the part locally.

Other features and advantages of the present invention will be understood from the following detailed description of an illustrative embodiment of its object in relation to the attached drawings.

### Description of the Drawings

Figures 1a, 1b, 1c and 1d show the forming process for forming a laminate according to the previously known technique.
Figure 2 shows detail 4 of Figure 1b of the slippage effect between the laminate plies according to the forming process of the previously known technique.
Figure 3 schematically shows elevational and profile views of a composite material skin with a stiffener element and an upper skin with a thickness change according to the previously known technique.
Figure 4 schematically shows the effect caused in a laminate when it must be formed to obtain the geometry of Figure 3 according to the previously known technique.
Figure 5 shows a detail of Figure 3, showing an enlarged view of the transition area in which slippage occurs according to the previously known technique.
Figure 6 shows a sectional sketch of Figure 3, showing the local section change and the local slippage forced by it according to the previously known technique.
Figure 7 schematically shows the profile of a skin made of composite material according to the configuration proposed in the present invention.
Figure 8 shows a detail of Figure 6, showing an enlarged view of the transition area in the section change, according to the present invention.
Figure 9 schematically shows a sectional sketch of Figure 7, showing the local section change maintaining the perimeter thereof, according to the present invention.
Figure 10 shows the three-dimensional model of a rib of the wing of an aircraft, in which one of the supporting bases of the skin requires a plane change.
Figure 11 shows the traditional solution for the plane change of the skin of Figure 10.
Figure 12 shows a solution based on the present invention for the plane change of the skin of Figure 10.

### Detailed Description of the Invention

Therefore, as previously described the object of the present invention is a forming process for forming laminates made of composite material obtained by manually or automatically stacking tapes consisting of reinforcing fibers with defined orientation preimpregnated with polymeric resins which allows obtaining very complex folded geometries, reducing the area of influence of the areas formed by means of adapting the geometry of the part to a developable or almost developable geometry, making slippage of the reinforcing fibers associated to the forming local. Applying a consolidation process by means of pressure and temperature allows compacting the material, removing the excess resin and volatile substances, while at the same time consolidation (by resin cross-linking if the resin is thermosetting resin, or by welding if it is a thermoplastic resin) provides a panel with high mechanical performance.

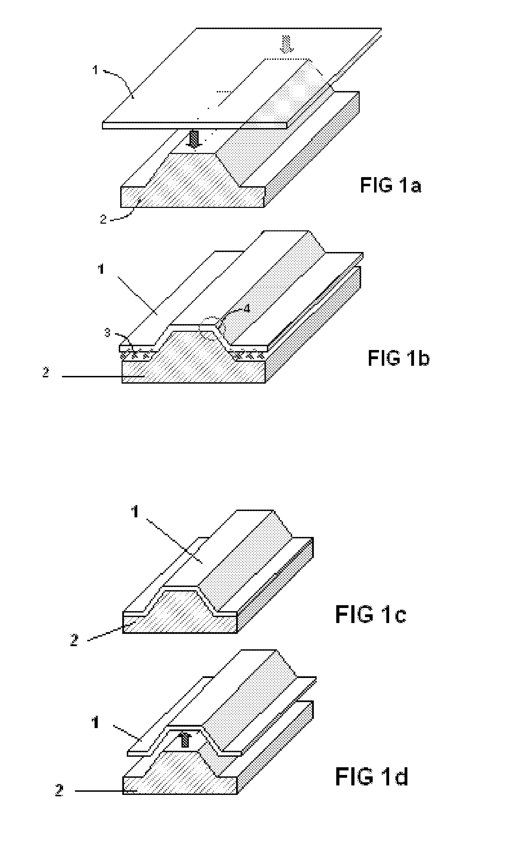

Figures 1a, 1b, 1c and 1d schematically show the forming process for forming a laminate formed by a plurality of uncured preimpregnated laminas according to a known technique. There are many processes for achieving the same result: forming with a hot platen press, with an elastomeric female jig, with an elastomeric diaphragm, with a double diaphragm, with a vacuum bag, etc., and all of them are compatible with the proposed geometric configuration and forming method.

Figure 1a shows the laminate 1 before the hot-forming process, immediately before it is placed on the forming jig 2, in this particular case, a mold with a constant section to obtain an omega-shaped geometry. Figure 1b shows the same laminate 1 during the forming process, in which a progressive adaptation 3 of laminate to the jig 2 occurs. Figure 1c shows the laminate 1 completely formed on the jig 2, and Figure 1d shows the extraction of the now formed laminate 1 from the jig 2. The final geometry is developable, and the forming is a folding in which all the preimpregnated laminas have uniform and identical relative displacement in any section perpendicular to the direction of the folding.

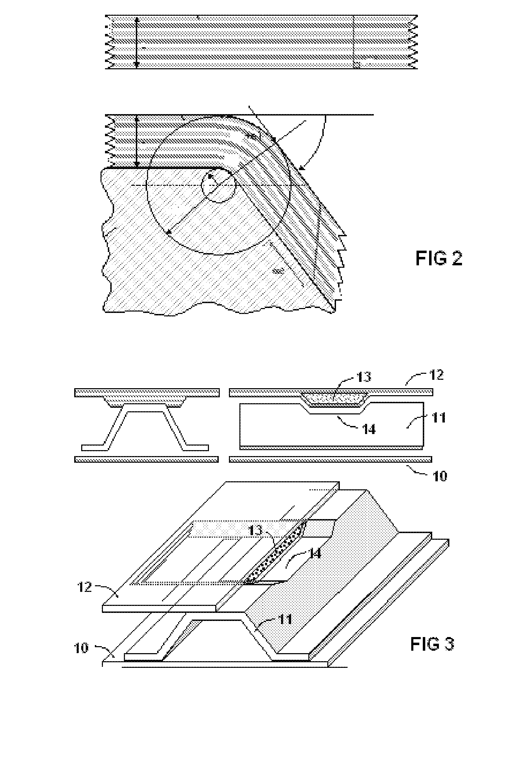

Independently of the chosen forming technique, the forming process for forming preimpregnated laminates is carried out thanks to a creep phenomenon: heat, to decrease the viscosity of the resin, and therefore to reduce the friction between the reinforcing fibers, and pressure applied slowly and in a guided manner (to achieve the slippage of the fibers in their plane, without causing creases). Figure 2 shows the interply slippage along the thickness of the laminate 1 of detail 4 in Figure 1b, derived from the contour conditions of the forming: a plane originally perpendicular to the thickness of the laminate 1 it is no longer perpendicular thereto as a consequence of said slippage.

Laminate forming to provide developable geometries is relatively simple and is known in the state of the art of composite material structure manufacturing technology: straight elements or elements with small curves, such as C-, L, omega-, etc, shaped stringers, longitudinal members and stiffeners are thus manufactured. Figure 3 schematically shows elevational and profile views, and perspective view, of a skin made of composite material 10 with an omega-shaped stiffener 11 similar to the one of Figure 1, and an upper skin 12 with a thickness change 13 forcing a local section change 14 in the omega-shaped stiffener 11.

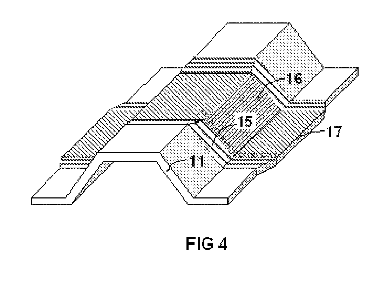

Figure 4 schematically shows the effect caused in a laminate when it must be formed to obtain the geometry of Figure 3. The displacement of the preimpregnated laminates is no longer uniform and identical for each section, there being a transaction area 15 in which there is slippage between contiguous sections which, in combination with the existence of laminas with different orientations of the reinforcing fibers, forces the formation of creases and distortions of the reinforcing fibers.

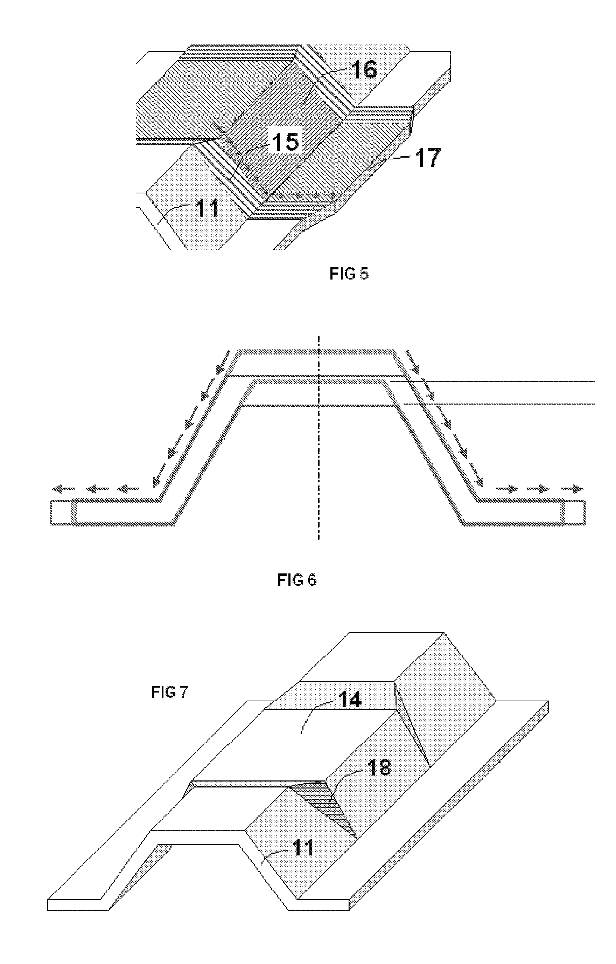

The area of influence of the section change then extends to the entire width of the section of the laminate 17, areas marked as 15 and 16, causing a raising of the edge of the laminate 17 in the entire area of influence of the forming (see the detail in Figure 5).

The local section change 18 and local displacement forced by it is schematically shown in the sketch of Figure 6.

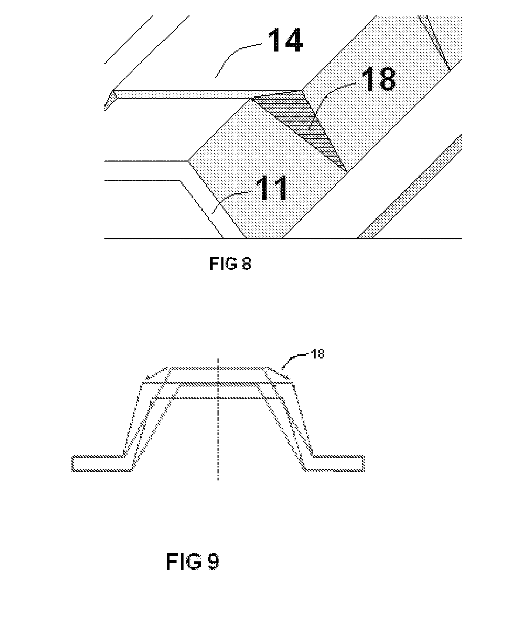

Figure 7 shows the configuration proposed in the present invention, in which the section change is carried out by folding the laminate and thus creating a transition area 18 which allows maintaining the perimeter of the deformed section along the entire deformed length (detail in Figure 8), reaching a final developable or almost developable shape. All the preimpregnated laminates therefore have almost uniform and virtually identical relative displacement in any section perpendicular to the direction of the folding. So there is no slippage between contiguous sections, and the area of influence of the section change does not extend to the rest of the laminate, being limited to the formed area.

The section change maintaining the perimeter thereof and eliminating the distortion area of the laminate is shown in Figure 9.

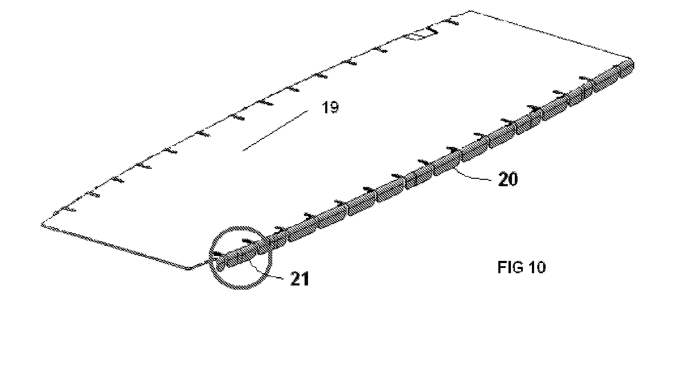

The invention can be extended to any element and configuration requiring forming, as is shown in Figure 10, in which a rib of the wing of an aircraft is shown, with a web 19, bases which are used as interface with the aerodynamic skins 20, and a base 21 requiring a plane change to absorb a thickness change of the skin, similar to the section change 14 of the stiffener of Figure 3.

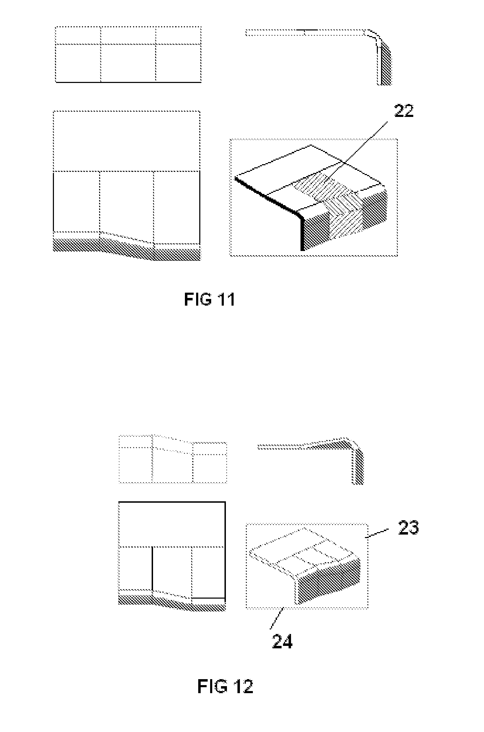

Figure 11 shows the traditional solution, keeping the web of the rib in one plane and forcing the local distortion of the laminate 22 in the plane change area of the support base.

Figure 12 shows the solution based on the solution proposed in the present invention, forcing the plane change of the web of the rib (23) and the radius change (24) such that the plane change of the support base is obtained by means of folding, without distortion.

Those modifications comprised within the scope defined by the following claims can be introduced in the embodiments described above.

## Claims

1. A forming process for forming laminates made of composite material obtained by means of stacking tapes comprising reinforcing fibers with a defined orientation preimpregnated with polymeric resins for obtaining geometries of structural parts made of composite material for aircraft, the mentioned forming process for forming the laminates made of composite material being carried out by means of applying pressure and temperature, **characterized in that** the forming of laminates made of composite material is carried out by means of folding the laminates without these laminates becoming distorted, creating folds, transition areas (18) and radius changes (24) which allow maintaining the perimeter of the deformed section along the entire deformed length, such that all the preimpregnated laminates have substantially uniform and identical relative displacement in any section perpendicular to the direction of the fold.

2. A forming process for forming laminates made of composite material according to claim 1, **characterized in that** the mentioned forming process is carried out by applying pressure slowly and in a guided manner to achieve the slippage of the fibers in their plane without causing creases.

3. A forming process for forming laminates made of composite material according to claim 1 or 2, **characterized in that** the reinforcing fibers of the laminates made of composite material are continuous fibers.

4. A forming process for forming laminates made of composite material according to claim 1 or 2, **characterized in that** the reinforcing fibers of the laminates made of composite material are very long discontinuous fibers.

5. A forming process for forming laminates made of composite material according to any of the previous claims, **characterized in that** the reinforcing fibers of the laminates made of composite material are preimpregnated with thermosetting polymeric resins.

6. A forming process for forming laminates made of composite material according to any of claims 1 to 4, **characterized in that** the reinforcing fibers of the laminates made of composite material are preimpregnated with thermoplastic polymeric resins.

7. A forming process for forming laminates made of composite material according to any of the previous claims, **characterized in that** the stacking of tapes for forming the laminates made of composite material is carried out manually.

8. A forming process for forming laminates made of composite material according to any of claims 1 to 6, **characterized in that** the stacking of tapes for forming the laminates made of composite material is carried out automatically.

9. A geometry of structural parts made of composite material for aircraft comprising laminates with stacks of tape in turn comprising reinforcing fibers with a defined orientation preimpregnated with polymeric resins, **characterized in that** the mentioned geometry is obtained by means of folding and is adapted to a substantially developable shape, comprising folds, transition areas (18) and radius changes (24) which allow maintaining the perimeter of the deformed section along the entire deformed length, such that all the preimpregnated laminates have substantially uniform and identical relative displacement in any section perpendicular to the direction of the fold.

10. A geometry of structural parts made of composite material for aircraft according to claim 9, **characterized in that** the reinforcing fibers of the laminates made of composite material are continuous fibers.

11. A geometry of structural parts made of composite material for aircraft according to claim 9, **characterized in that** the reinforcing fibers of the laminates made of composite material are very long discontinuous fibers.

12. A geometry of structural parts made of composite material for aircraft according to any of claims 9 to 11, **characterized in that** the reinforcing fibers of the laminates made of composite material are preimpregnated with thermosetting polymeric resins.

13. A geometry of structural parts made of composite material for aircraft according to any of claims 9 to 11, **characterized in that** the reinforcing fibers of the laminates made of composite material are preimpregnated with thermoplastic polymeric resins.

14. A geometry of structural parts made of composite material for aircraft according to any of claims 9 to 13, **characterized in that** the stacking of tapes for forming the laminates made of composite material is carried out manually.

15. A geometry of structural parts made of composite material for aircraft according to any of claims 9 to 13, **characterized in that** the stacking of tapes for forming the laminates made of composite material is carried out automatically.
